# EUROPEAN PATENT SPECIFICATION

(11) **EP 1 870 890 B1**
(45) Date of publication and mention of the grant of the patent: **03.06.2009**
(21) Application number: 06115652.7
(22) Date of filing: 19.06.2006
(51) Int. Cl.: G11B 17/24

(54) **Optical disk access control and storage apparatus**
Zugangssteuerung für eine optische Platte und Speichergerät
Contrôle de l'accès au disque optique et appareil de stockage

(43) Date of publication of application: 26.12.2007
(73) Proprietor: Acard Technology Corp., San Chung, Taipei Hsien, Taiwan (TW)
(72) Inventor: Lee, Hsien-der, Taipei Hsien (TW); Wang, Tsun-san, Taipei Hsien (TW)
(74) Representative: 2K Patentanwälte Blasberg Kewitz & Reichel

(56) References cited:
- EP-A2- 1 006 521
- WO-A-91/14264
- AU-B2- 428 095
- DE-A1- 19 623 125
- US-A- 4 742 405
- US-A- 5 105 414
- US-A1- 2003 058 754

## Description

### FIELD OF THE INVENTION

This invention relates generally to an optical disc access control and storage apparatus, in particular to an optical disc access control and storage apparatus that can flip a disc and need not accommodate customized disc player(s).

### BACKGROUND OF THE INVENTION

Characterized by small size and large volume, optical discs have become one of the best media used by individuals and companies to save data. As technology develops, the recordable areas of an optical disc evolve from a single side of the disc to double sides of the disc and from a single layer of the disc to multiple layers of the disc on each side of the disc. As a result, most individual data can be recorded in one optical disc. However, the volume of one optical disc is not enough for a company, an institution, or a library to save data. They usually need hundreds or thousands of discs to record data. Different type of discs are catalogued by their natures and volumes as compact disc - read only memory (CD-ROM), compact disc - recordable (CD-R), compact disc - rewriteable (CD-RW), digital video - read only memory (DVD-ROM), digital video disc - recordable (DVD-R), and digital video disc - rewritable (DVD-RW) wherein the volume of the CD series optical disc can reach hundreds of megabytes (MB) and the volume of the DVD series optical disc can reach several gigabytes (GB). The recently developed blue ray disc (BD) has eight recordable layers on a single side of a BD and the recordable volume can reach 200 GB. In processing a great amount of data, a user records the data on multiple discs and when the user needs one of the recorded discs, he/she then locates the needed disc and places it into a disc player in a computer to read the recorded data. Therefore, when the amount of recorded discs is large, management of the discs becomes very important.

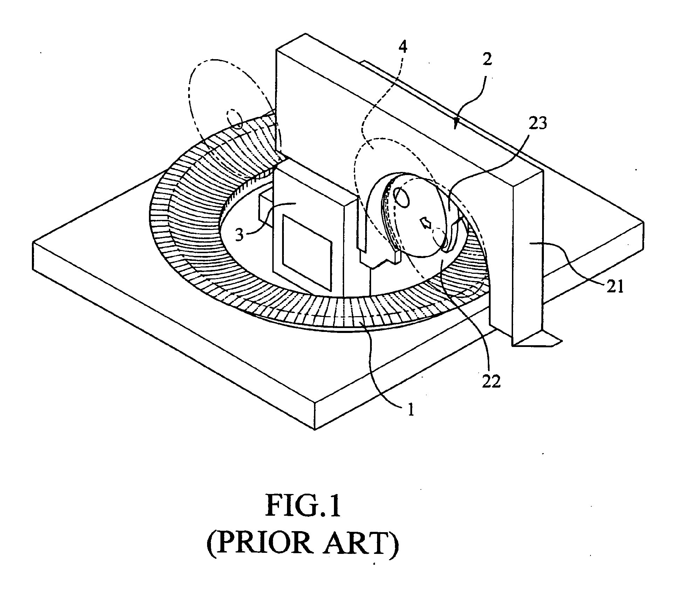

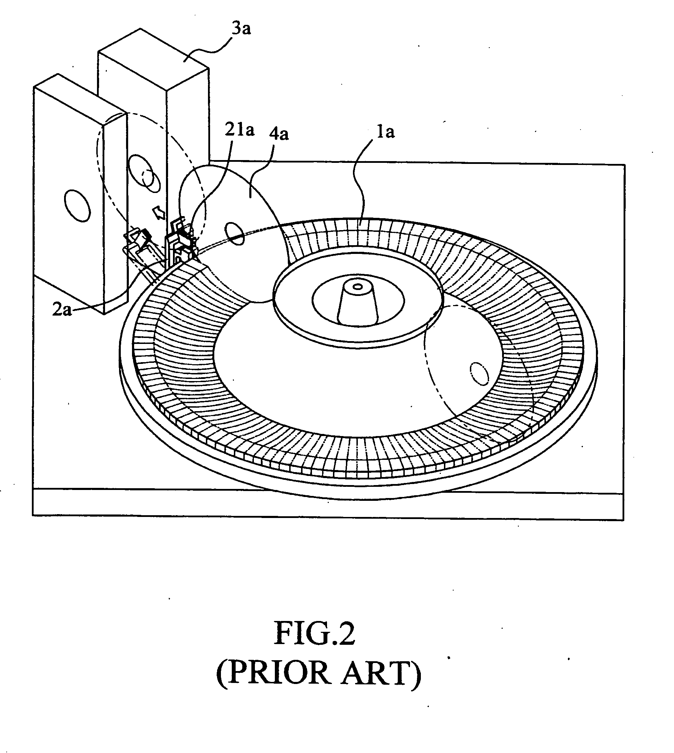

To overcome the management problem, please see Fig.1, a conventional art providing an optical disc access control and storage apparatus, which contains a rotating plate 1 having multiple slots therein, a disc-pushing mechanism 2 and a disc player 3 wherein the disc-pushing mechanism 2 contains a frame 21 forming a channel 22 therein for allowing a disc 4 in the rotating plate 1 to stay in place, and a disc-pushing shaft 23 having one end installed in the frame 21 for pushing the disc into the disc player 3, so that the disc player 3 can read the disc 4. A computer connected to the disc access control apparatus through software thereof controls the rotation of the rotating plate 1 to select the disc 4, the operation of the disc-pushing mechanism 2 and the on/off function of the disc player 3. Referring to Fig. 2, another conventional art provides a disc access control apparatus, which contains a rotating plate 1a having multiple slots therein, a disc-pushing mechanism 2a and a disc player 3a wherein the disc-pushing mechanism 2a contains a clamping arm 21a. A computer connected to the disc access control apparatus through software thereof controls the rotation of the rotating plate 1a to select the disc 4a and the clamping arm 21a clamps the disc 4a and deliver the disc 4a to the disc player 3a so that the disc player 3a can read the disc 4a.

However, the conventional arts can only push the elected discs 4, 4a in a single direction, not flip the discs 4, 4a. That is, the discs 4, 4a can only move in the radial direction. Hence, the corresponding disc players 3, 3a have to comply with the moving direction of the optical disc 4, 4a. Therefore, the disc players 3, 3a have to be customized to comply with different designs of different optical disc access control and storage apparatus. To provide different customized disc players, the manufacturers of the optical disc access control and storage apparatus have to devote much more time to design it and the cost of designing and manufacturing the optical disc access control and storage apparatus increases.

A further conventional art is disclosed in PCT application publication number WO 91/14264. It discloses a remote controlled disc loader comprising a housing of predetermined dimensions for supporting a compact disc player, incorporating a carousel for storing a plurality of compact discs in circular arrangement, an extraction apparatus for removing successive predetermined compact discs, an apparatus for opening the disc tray of the compact disc player, and an arcuate arm for grasping the predetermined compact discs and lift individual discs to a position over the opened disc carrying tray and releasing the disc into the tray. Although the loader can move a disc from a vertical position into a horizontal position, the loader requires large spaces to accomplish movement by swinging the disc, and the structure thereof is complex.

Therefore, a well-organized optical disc access control and storage apparatus that can flip a disc, need not accommodate a customized disc player, and utilize the disc player of standard specifications in the market is needed.

### SUMMARY OF THE INVENTION

A primary object of the present invention is to provide an optical disc access control and storage apparatus that can flip a disc to a desired position. Another object of the present invention is to provide an optical disc access control and storage apparatus, which need not accommodate a customized disc player, and utilizes the disc player of standard specifications in the market.

The present invention in one embodiment relates to an optical disc access control and storage apparatus. The optical disc access control and storage apparatus mainly contains: a horizontal rotating plate, a first disc-pushing mechanism, a second disc-pushing mechanism, an auxiliary-fixing mechanism, a seizing mechanism for seizing the disc, a rotating mechanism, a coordinate-displacing mechanism, and at least one disc player. The horizontal rotating plate contains multiple slots therein which extend in radial direction for vertically storing a disc and rotating the disc. The first disc-pushing mechanism contains a frame, forming a channel therein for allowing the disc stored on the rotating plate to stay in place, and a disc-pushing shaft, having one end installed in the frame for horizontally pushing the disc. The second disc-pushing mechanism contains: a positioning slot, for positioning the disc pushed by the first disc-pushing mechanism and holding the disc vertically, and a first detecting device, for detecting whether the disc is positioned in the positioning slot. The auxiliary-fixing mechanism contains: a clamp acting on the upper periphery of the disc for clamping the disc in the positioning slot, a stretchable arm, having one end connected to the clamp, and a first driving mechanism, for controlling the clamp and the stretchable arm. The seizing mechanism for seizing said disc contains multiple claws. The multiple claws are able to pass through a central hole of the disc in the positioning slot when gathered together, then expand outwardly to seize the disc. The rotating mechanism is connected to the seizing mechanism for rotating the seizing mechanism in either a leftward or rightward direction up to 90 degrees respectively such that the disc is lifted away from the positioning slot and in turn to be horizontally placeable. The coordinate-displacing mechanism is connected to the rotating mechanism for controlling vertical or horizontal positions of the seizing mechanism. Each disc player contains a tray stretchably received therein for receiving the disc released from the seizing mechanism. In operation, the optical disc control and storage apparatus selects the disc through software of a computer connected thereto and pushes the disc in the first disc-pushing mechanism to the second disc-pushing mechanism. The auxiliary-fixing mechanism fixes the disc positioned in the second disc-pushing mechanism. The seizing mechanism seizes the disc through the rotating mechanism and the coordinate-displacing mechanism, then the auxiliary-fixing mechanism releases the disc and the seizing mechanism releases the disc to the tray of the player through the rotating mechanism and the coordinate-displacing mechanism.

### BRIEF DESCRIPTION OF THE DRAWINGS

The above objects and advantages of the present invention will become more apparent from an ensuing description of a preferred embodiment thereof with reference to the attached drawings, in which:
Fig. 1 is a perspective view of a prior art;
Fig. 2 is a perspective view of another prior art;
Fig. 3 is a perspective view of an embodiment of the present invention;
Fig. 4 is a partially enlarged perspective view of the embodiment wherein the disc is pushed from the first disc-pushing mechanism to the second disc-pushing mechanism;
Fig. 5 is another partially enlarged perspective view of the embodiment wherein the disc is positioned in the second disc-pushing mechanism and the clamp of the auxiliary-fixing mechanism fixes the disc for allowing the claws of the seizing mechanism to pass through the central hole of the disc;
Fig. 6 is a further partially enlarged perspective view of the embodiment wherein the seizing mechanism seizes the disc through its claws and moves the disc above the opened tray of the disc player through the coordinate-displacing mechanism;
Fig. 7 is a still further partially enlarged perspective view of the embodiment wherein the rotating mechanism rotates the disc to face the opened tray of the disc player;
Fig. 8 is a perspective view of the seizing mechanism wherein the stretching element of the stretching mechanism is stretched out to enable the claws of the seizing mechanism to gather together to pass through the central hole of the disc; and
Fig. 9 is another perspective view of the seizing mechanism wherein the stretching element of the stretching mechanism is drawn back to enable the claws of the seizing mechanism to expand outwardly to size the disc against a plane of a truss of the seizing mechanism.

### DETAILED DESCRIPTION OF THE PREFERRED EMBODIMENTS

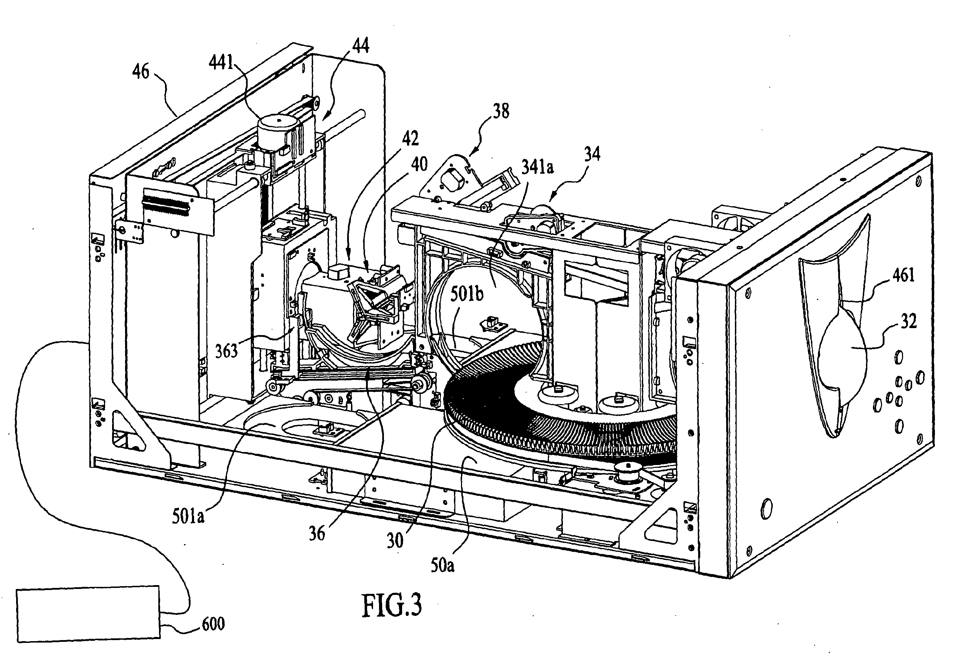

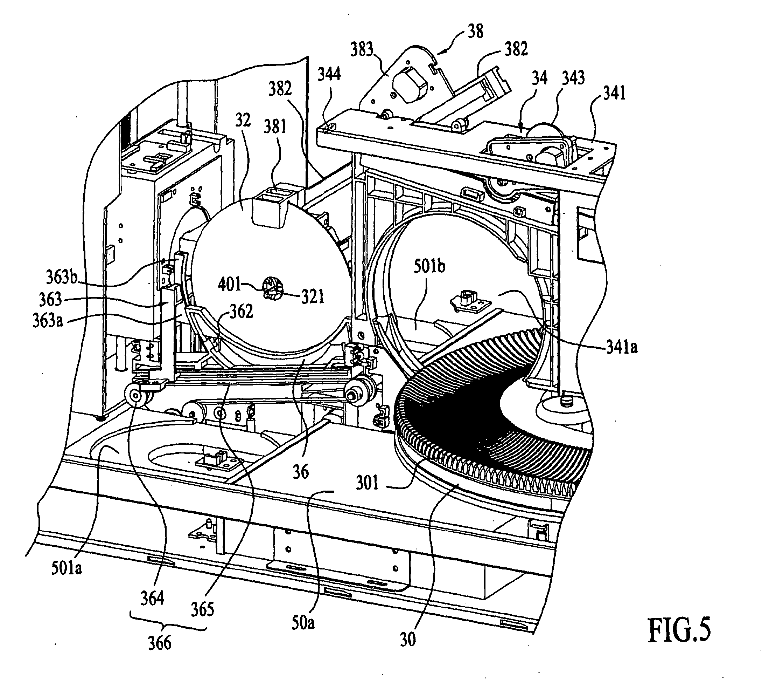

With reference to Figs. 3-7, the first embodiment of the present invention is an optical disc access control and storage apparatus. The optical disc access control and storage apparatus mainly contains: a horizontal rotating plate 30, a first disc-pushing mechanism 34, a second disc-pushing mechanism 36, an auxiliary-fixing mechanism 38, a seizing mechanism 40 for seizing the disc 32, a rotating mechanism 42, a coordinate-displacing mechanism 44, and two disc players 50a, 50b. Referring to Figs. 3 and 5, the disc 32 can be placed into multiple slots 301 of the horizontal rotating plate 30 through an access opening 461 in an apparatus body 46 of the optical disc access control and storage apparatus. The multiple slots 301 extend in radial direction for vertically storing discs and rotating the same. A computer 600 connected to the apparatus controls the rotation of the rotating plate 30 so as to move the disc 32 in the slot 301 to a predetermined position.

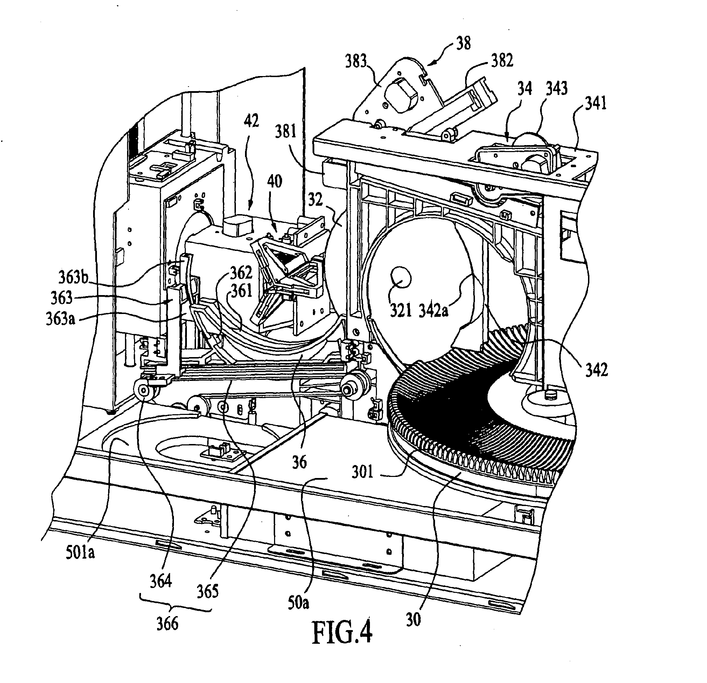

With reference to Figs. 3 and 4, the first disc-pushing mechanism 34 contains: a frame 341 formed with a channel 341 a therein for the disc 32 in the rotating plate 30 to stay or pass through and a disc-pushing shaft 342 having one end connected to the second driving mechanism 343 in the frame 341 for controlling the disc-pushing shaft 342 so as to move the disc 32 along the radial direction of the disc 32 wherein the disc-pushing shaft 342 has an arced surface 342a corresponding to an edge of the disc 32. The second driving mechanism 343 contains a motor and a transmission speed-reducing mechanism set. The first disc-pushing mechanism 34 further contains a second detecting device 344 installed thereon, and when the second detecting device 344 detects a clamp 381 of the auxiliary-fixing mechanism 38, the computer 600 generates a signal ordering the disc-pushing shaft 342 to return to its original position.

With reference to Figs. 4 and 5, the second disc-pushing mechanism 36 contains: a positioning slot 361 for positioning the disc 32 pushed by the first disc-pushing mechanism 34 and holding the disc 32 vertically, a first detecting device 362 for detecting whether the disc 32 is located in the positioning slot 361, a pushing element 363 having a through slot 363a therein, which can pass through the positioning slot 361 and a holding element 363b, and the third driving mechanism 366 having a pulley set 364 and a belt set 365 disposed on the pulley set 364. When a user wants to have the disc 32 in the positioning slot 361 return to the rotating plate 30, the pulley set 364 and the belt set 365 of the third driving mechanism 366 drive the pushing element 363 to push the disc 32 back to the multiple slots 301 of the rotating plate 30. Since the pushing element 363 has the through slot 363a therein, which can pass through the positioning slot 361, the pushing element 363 would not be stopped by the positioning slot 361 in the process of pushing the disc 32.

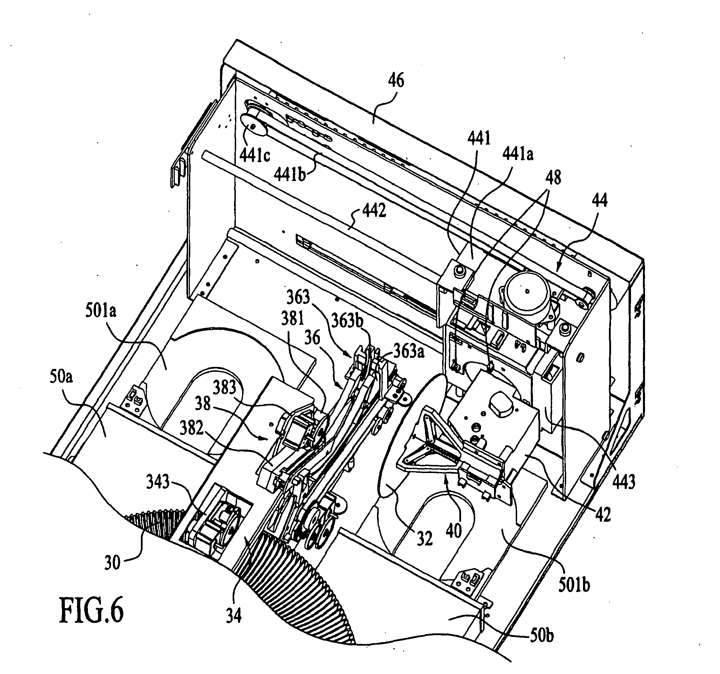

With reference to Figs. 5 and 6, the auxiliary-fixing mechanism 38 contains: the clamp 381 acting on the upper periphery of the disc 32 for fixing the disc 32 in the positioning slot 361 of the second disc-pushing mechanism 36, a stretchable arm 382 having one end connected to the clamp 381, and a first driving mechanism 383 for controlling the operations of the clamp 381 and the stretchable arm 382. When the seizing mechanism 40 has seized the disc 32, the computer 600 generates a command ordering the clamp 381 to release the disc 32 and return to its original position.

With reference to Figs. 6-10, the seizing mechanism 40 contains three claws 401 wherein each of the three claws 401 has a hook 401 a disposed at the external side thereof. When the three claws 401 assemble together, they can pass through the central hole 321 of the disc 32 in the positioning slot 361 of the second disc-pushing mechanism 36. When the claws 401 pass through the central hole 321, they expand outwardly such that the hook 40 1a can seize the disc 32. When it is desired to release the seized disc 32, the expanded claws 401 assemble together and retreat from the central hole 321 of the disc 32 to release the disc 32.

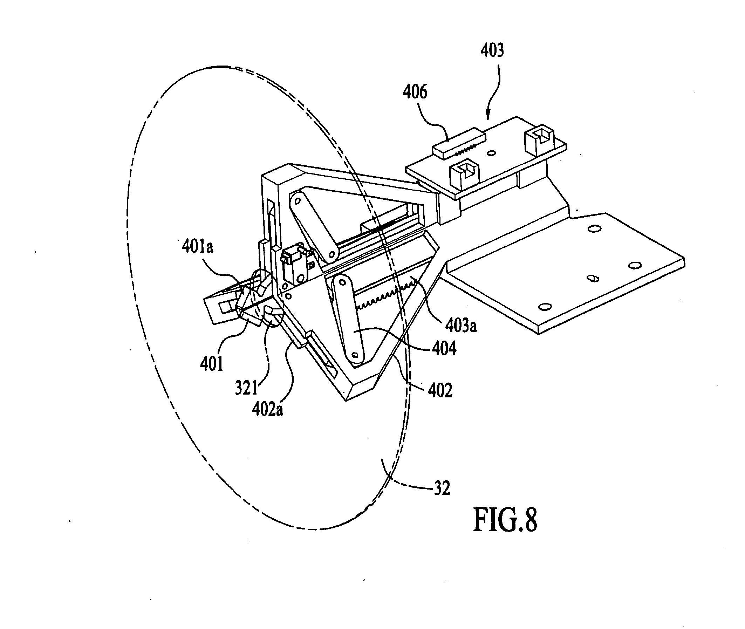

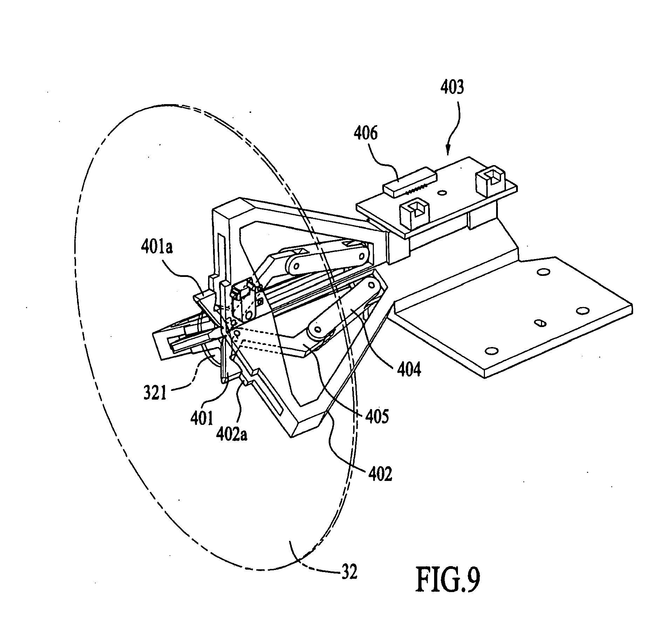

Regarding the specific structures of the seizing mechanism 40, please refer to Figs. 8 and 9. The seizing mechanism 40 contains a truss 402, a stretching mechanism 403 having an axially movable stretching element 403a, three first rods 404 wherein each of them pivotally connects to the stretching element 403a of the stretching mechanism 403 with one end respectively, and three second rods 405 (see Fig. 9) wherein each of them connects to the other end of the first rod 404 and the other end of each of the second rods 405 firmly fixed to the three claws 401 and also pivotally connected to the truss 402. Therefore, the corresponding angle between each of the claws 401 and the second rod 405 is fixed and when the second rods 405 move, the claws 401 move correspondingly. When the stretching element 403a of the stretching mechanism 403 stretches out, the three claws 401 assemble together through the mechanically interactive relationships between the first rod 404 and the second rod 405. When the stretching element 403a of the stretching mechanism 403 draws back, the three claws 401 expand outwardly and the hooks 401a of the three claws 401 seize the disc 32 against a plane 402a of the truss 402. The operation of the stretching element 403a of the stretching mechanism 403 is controlled by a fourth driving mechanism 406 and the fourth mechanism 406 contains a motor and a transmission speed-reducing mechanism set.

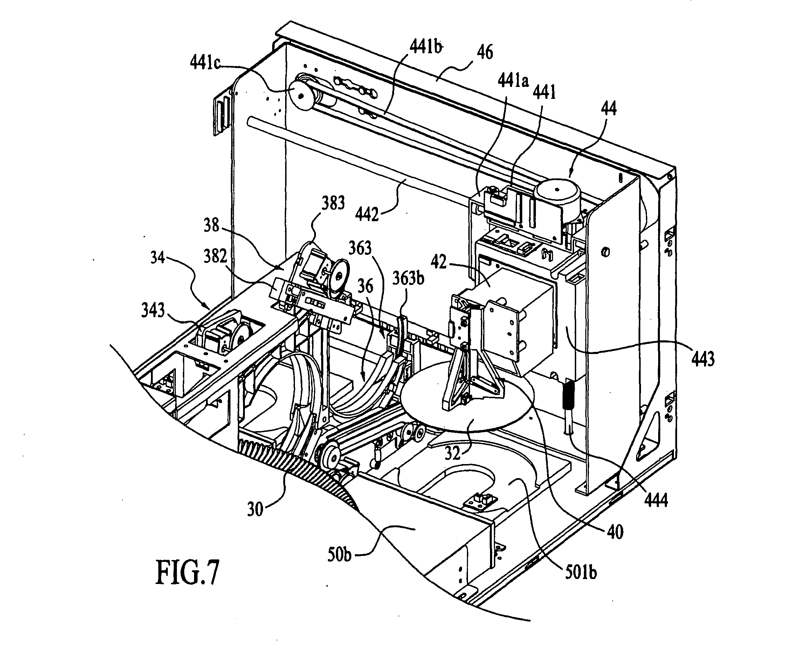

With reference to Figs. 6 and 7, the rotation mechanism 42 connects the seizing mechanism 40 for rotating the seizing mechanism 40 in either a leftward or rightward direction up to 90 degrees respectively. To seize the disc 32 in the positioning slot 361 of the second disc-pushing mechanism 36, the rotating mechanism 42 rotates the seizing mechanism 40 such that the three claws 401 face the central hole 321 of the disc 32. Thereafter, to place the disc 32 into the trays 501a, 501b of the disc players 50a, 50b, the rotating mechanism 42 rotates the seizing mechanism 40 by 90 degrees such that the disc 32 is lifted away from the positioning slot 361 and can be horizontally placed in the trays 501a, 501b of the disc players 50a, 50b (see Fig. 6).

With reference to Figs. 6 and 7, the coordinate-displacing mechanism 44 connects to the rotating mechanism 42 for controlling the vertical and horizontal positions of the seizing mechanism 40 in order that the claws 401 of the seizing mechanism 40 are aligned with the central hole 321 of the disc 32. The coordinate-displacing mechanism 44 mainly contains a horizontal movement mechanism 441, a horizontal rod 442, a vertical movement mechanism 443, and a vertical rod 444. The horizontal movement mechanism 441 contains a pulley set 441c and a belt set 441b installed on the pulley set 441c. The horizontal rod 442 horizontally passes through the horizontal movement mechanism 441 and is horizontally installed in the apparatus body 46 of the optical disc access control and storage apparatus for allowing the horizontal movement mechanism 441 to move horizontally along the horizontal rod 442. The vertical movement mechanism 443 is installed in the horizontal movement mechanism 441. The vertical movement mechanism 443 is connected to the rotating mechanism 42. The vertical rod 444 vertically passes through the vertical movement mechanism 443 and is vertically installed in a housing 441a of the horizontal movement mechanism 441 for allowing the vertical movement mechanism 443 to move vertically along the vertical rod 444. Referring to Fig. 6, multiple sensors 48 are installed at the coordinate-displacing mechanism 44 for informing the computer 600 of the position of the coordinate-displacing mechanism 44.

With reference to Figs. 3 to 7, the two disc players 50a, 50b are installed on two sides of the apparatus respectively. Each of the two disc players 50a, 50b, has a tray 501a, 501b respectively stretchably received therein for receiving the disc 32 released from the seizing mechanism 40. Through the above-mentioned process, a user can select a disc 32 via the computer 600 and put it into the disc player 50a, and similarly select a blank disc and then put it into the disc player 50b; thereby, the user can copy the data in the disc 32 to the blank disc.

The operation process of the apparatus is as follows: (i) selecting a disc 32 through a software of a computer 600 of the optical disc access control and storage apparatus; (ii) rotating the selected disc 32 in the rotating plate 30 to a channel 341a of the frame 341of the first disc-pushing mechanism 34; (iii) pushing the disc 32 in the rotating plate 30 through the disc-pushing shaft 342 of the first disc-pushing mechanism 34 to the second disc-pushing mechanism 36; (iv) fixing the disc 32 in the positioning slot 361 of the second disc-pushing mechanism 36 ; (v) seizing the disc 32 through the seizing mechanism 40 via the rotating mechanism 42 and coordinate-displacing mechanism 44; (vi) generating a signal from the computer 600 ordering the clamp 381 of the auxiliary-fixing mechanism 38 to release the disc 32 and return to its original position, and (vii) releasing the disc 32 from the seizing mechanism 40 to the opened trays 501a, 501 b of the disc players 50a, 50b through the rotating mechanism 42 and coordinate-displacing mechanism 44.

Similarly, when the user wants to return the disc 32 in the disc players 50a, 50b to the rotating plate 30, the process is as follows: (i) ordering the disc players 50a, 50b to open the trays 501a,501b, (ii) seizing the disc 32 through the seizing mechanism 40 via the rotating mechanism 42 and the coordinate-displacing mechanism 44; (iii) placing the seized disc 32 into the positioning slot 361 of the second disc-pushing mechanism 36 through the rotating mechanism 42 and the coordinate-displacing mechanism 44; (iv) fixing the disc 32 through the clamp 381 of the auxiliary-fixing mechanism 38 and allowing the claws 401 of the seizing mechanism 40 to retreat from the central hole 321 of the disc 32; and (v) ordering the clamp 381 to release the disc 32 and pushing the disc 32 from the second disc-pushing mechanism 36 to the slot 301 of the rotating plate 30 in the channel 341a by the pushing element 363 of the second disc-pushing mechanism 36.

## Claims

1. An optical disc access control and storage apparatus comprising:
a horizontal rotating plate (30) comprising multiple slots (301) therein which extend in radial direction for vertically storing discs (32) and rotating the same;
a first disc-pushing mechanism (34) comprising:
a frame (341), forming a channel (341a) therein for allowing a disc stored on said rotating plate (30) to stay or pass through; and
a disc-pushing shaft (342), having one end installed in said frame (341) for pushing said disc (32) in a radial direction of said disc (32);
a second disc-pushing mechanism (36) comprising:
a positioning slot (361), for positioning said disc (32) pushed by said first disc-pushing mechanism (34) and holding said disc (32) vertically; and
a first detecting device (362), for detecting whether said disc (32) is positioned in said positioning slot (361);
an auxiliary-fixing mechanism (38), comprising:
a clamp (381) acting on the upper periphery of said disc (32) for clamping said disc (32) in said positioning slot (361);
a stretchable arm (382), having one end connected to said clamp (381); and
a first driving mechanism (383), for controlling said stretchable arm (382) and said clamp (381);
a seizing mechanism (40) for seizing said disc (32), said seizing mechanism (40), comprising multiple claws (401), said multiple claws (401) being able to pass through a central hole (321) of said disc (32) in said positioning slot (361) when gathered together, which then expand outwardly to seize said disc (32);
a rotating mechanism (42), connected to said seizing mechanism (40)for rotating said seizing mechanism (40) in either a leftward or rightward direction up to 90 degrees respectively_such that said disc (32) is lifted away from said positioning slot (361) and is turned to be horizontally placeable;
a coordinate-displacing mechanism (44), connected to said rotating mechanism (42), for controlling vertical and horizontal positions of said seizing mechanism (40); and
at least one disc player (50a, 50b), each said disc player (50a, 50b) comprising a tray (501a, 501b) stretchably received therein for receiving said disc (32) released from said seizing mechanism (40);
wherein said optical disc access control and storage apparatus selects said disc (32) through a software of a computer (600) connected thereto and pushes said disc (32) in said first disc-pushing mechanism (34) to said second disc-pushing mechanism(36), said auxiliary-fixing mechanism (38) fixing said disc positioned in said second disc-pushing mechanism (38), said seizing mechanism (40) seizing said disc (32) through said rotating mechanism (42) and said coordinate-displacing mechanism (44), then said auxiliary-fixing mechanism (38) releasing said disc (32) and said seizing mechanism (40) releasing said disc (32) to said tray (501 a, 501b) of said player through said rotating mechanism (42) and said coordinate-displacing mechanism (44).

2. The optical disc access control and storage apparatus of claim 1, wherein when said multiple claws (401) of said seizing mechanism (40) seize said disc (32), said computer (600) generates a signal ordering said clamp (381) of said auxiliary-fixing mechanism (38) to release said disc (32) and return to its original position.

3. The optical disc access control and storage apparatus of claim 1 or 2, wherein said first disc-pushing mechanism (34) further comprises a second driving mechanism (343) for controlling said disc-pushing shaft (342) wherein said disc-pushing shaft (342) has an arced surface (342a) corresponding to a side of said disc (32).

4. The optical disc access control and storage apparatus of any of claims 1 to 3, wherein said first disc-pushing mechanism (34) further comprises a second detecting device (344) installed thereon, and when said second detecting device (344) detects said clamp (381) of said auxiliary-fixing mechanism (38), said computer (600) generates a signal ordering said disc-pushing shaft (342) to return to its original position.

5. The optical disc access control and storage apparatus of any of claims 1 to 4, wherein said second disc-pushing mechanism (36) further comprises:
a pushing element (363) comprising a through slot (363a) for passing through said positioning slot (361); and
a third driving mechanism (366), comprising:
a pulley set (364); and
a belt set (365), installed on said pulley set (364);
wherein said pulley set (364) and said belt set (365) of said third driving mechanism (366) drive said pushing element (363) to push said disc (32) to said multiple slots (301) of said rotating plate (30).

6. The optical disc access control and storage apparatus of claim 5, wherein when said first detecting device (362) detects said disc (32) at a predetermined location, said computer (600) generates a signal ordering said third driving mechanism (366) to stop running.

7. The optical disc access control and storage apparatus of any of claims 1 to 6, wherein said coordinate-displacing mechanism (44) comprises:
a horizontal movement mechanism (441), comprising a pulley set (441c) and a belt set (441b) installed thereon;
a horizontal rod (442), horizontally passing through said horizontal movement mechanism (441) and horizontally installed in an apparatus body (46) of said optical disc access control and storage apparatus for allowing said horizontal movement mechanism (441) to move horizontally along said horizontal rod (442);
a vertical movement mechanism (443), installed in said horizontal movement mechanism (441), said vertical movement mechanism (443) connected to said rotating mechanism (42); and
a vertical rod (444), vertically passing through said vertical movement (443) mechanism and vertically installed in a housing (441 a) of said horizontal movement mechanism (441) for allowing said vertical movement mechanism (443) to move vertically along said vertical rod (444).

8. The optical disc access control and storage apparatus of claim 7 further comprising multiple sensors (48) installed at said coordinate-displacing mechanism (44) for judging a position of said coordinate-displacing mechanism (44).

9. The optical disc access control and storage apparatus of any of claims 1 to 8, wherein said seizing mechanism (40) further comprises:
a truss (402);
a stretching mechanism (403) comprising a stretching element (403a) that can move axially;
multiple first rods (404), having one end pivotally connected to said stretching element (404) of said stretching mechanism (403); and
multiple second rods (405), each of said multiple second rods (405) having one end pivotally connected to the other end of said first rod (404) respectively, the other end of each of said multiple second rods (405) fixed to said multiple claws (401) respectively and pivotally connected to said truss (402);
wherein when said stretching element (403a) of said stretching mechanism (403) stretches out, said multiple claws (401) gather together, and when said stretching element (403a) of said stretching mechanism (403) draws back, said multiple claws (401) expand outwardly to seize said disc (32) against a plane (402a) of the truss (402).

10. The optical disc access control and storage apparatus of claim 9, wherein each of said multiple claws (401) have a hook (401 a) at its external side, and when said multiple claws (401) expand, said hook (401a) seizes said disc (32).

11. The optical disc access control and storage apparatus of claim 9 or 10, wherein said seizing mechanism (40) further comprises a fourth driving mechanism (406) for controlling said stretching mechanism (403).

12. The optical disc access control and storage apparatus of any of claims 9 to 11, wherein said disc player (50a, 50b) is a disc player of standard specification.

## Patentansprüche

1. Vorrichtung zur Zugangssteuerung für eine optische Platte und Speichervorrichtung, umfassend:
eine sich horizontal drehende Scheibe (30) mit mehreren darin ausgebildeten Schlitzen (301), die sich in radialer Richtung erstrecken, um Platten (32) vertikal aufzubewahren und diese zu drehen;
einen ersten Platten-Vorschiebemechanismus (34), der umfasst:
ein Gestell (341), in welchem eine Führung (341a) ausgebildet ist, damit sich die darin aufbewahrte Platte auf der sich drehenden Scheibe (30) darin aufhalten kann oder diese durchlaufen kann; und
einen Platten-Vorschiebeschaft (342), von dem ein Ende in dem Gestell (341) angebracht ist, um die Platte (32) in einer radialen Richtung der Platte (32) vorzuschieben;
einen zweiten Platten-Vorschiebemechanismus (36) der umfasst:
einen Positionierungsschlitz (361), um die von dem ersten Platten-Vorschiebemechanismus (34) vorgeschobene Platte (32) zu positionieren und diese Platte (32) vertikal zu halten; und
eine erste Erkennungseinrichtung (362) um zu erkennen, ob die Platte (32) in dem Positionierungsschlitz (361) positioniert ist;
einen Hilfsbefestigungsmechanismus (38) der umfasst:
eine Klemmeinrichtung (381), die auf den oberen Umfang der Platte (32) einwirkt, um die Platte (32) in dem Positionierungsschlitz (361) zu klemmen;
einen ausfahrbaren Arm (382), dessen eines Ende mit der Klemmeinrichtung (381) verbunden ist; und
einen ersten Antriebsmechanismus (383), um den ausfahrbaren Arm (382) und die Klemmeinrichtung (381) zu steuern;
einen Greifermechanismus (40), um die Platten (32) zu greifen, wobei der Greifmechanismus (40) mehrere Greifer (401) aufweist, wobei die mehreren Greifer (401) eine zentrale Öffnung (321) der Platte (32) in dem Positionierungsschlitz (361) durchqueren können, wenn diese zusammengefahren sind, welche dann anschließend auswärts ausgefahren werden können, um die Platte (32) zu greifen;
einen Drehmechanismus (42), der mit dem Greifermechanismus (40) gekoppelt ist, um den Greifermechanismus (40) entweder nach links oder nach rechts um jeweils bis zu 90 Grad zu drehen, sodass die Platte (32) von dem Positionierungsschlitz (361) abgehoben wird und gedreht wird, um in horizontaler Ausrichtung platziert werden zu können;
einen Koordinaten- Verschiebemechanismus (44), der mit dem Drehmechanismus (42) verbunden bzw. gekoppelt ist, um die vertikale und horizontale Stellung des Greifermechanismus (40) zu steuern; und
zumindest einen Plattenspieler (50a, 50b), wobei jeder Plattenspieler (50a, 50b) ein Fach (501a, 501b) aufweist, das darin ausfahrbar aufgenommen ist, um die von dem Greifermechanismus (40) freigegeben Platte (32) aufzunehmen;
wobei die Vorrichtung zur Zugangssteuerung für eine optische Platte und Speichervorrichtung die Platte (32) mittels einer Software eines mit dieser gekoppelten Computers (600) auswählt und die Platte (32) in dem ersten Platten-Vorschiebemechanismus (34) zu dem zweiten Platten-Vorschiebemechanismus (36) vorschiebt, der Hilfs-Befestigungsmechanismus (38), die in dem zweiten Platten-Vorschiebemechanismus (38) positionierte Platte fixiert, der Greifermechanismus (40) die Platte (32) mit Hilfe des Drehmechanismus (42) und des Koordinaten-Verschiebemechanismus (44) greift, dann der Hilfs-Fixiermechanismus (38) die Platte (32) freigibt und der Greifermechanismus (40) die Platte (32) zu dem Fach (501, 501b) des Spielers mit Hilfe des Drehmechanismus (42) und des Koordinaten-Verschiebemechanismus (44) freigibt.

2. Vorrichtung zur Zugangssteuerung für eine optische Platte und Speichervorrichtung nach Anspruch 1, wobei die mehreren Greifer (401) des Greifermechanismus (40) die Platte (32) greifen, wobei der Computer (600) ein Signal erzeugt, das die Klemmeinrichtung (381) des Hilfs-Fixiermechanismus (38) anweist, die Platte (32) freizugeben und in ihre Ruhestellung zurückzukehren.

3. Vorrichtung zur Zugangssteuerung für eine optische Platte und Speichervorrichtung nach Anspruch 1 oder 2, wobei der erste Platten-Vorschiebemechanismus (34) außerdem einen zweiten Antriebsmechanismus (343) aufweist, um den Platten-Vorschiebeschaft (342) zu steuern, wobei der Platten-Vorschiebeschaft (342) eine gewölbte Oberfläche (342a) aufweist, die einer Seitenfläche der Platte (32) entspricht.

4. Vorrichtung zur Zugangssteuerung für eine optische Platte und Speichervorrichtung nach einem der Ansprüche 1 bis 3, wobei der erste Platten-Vorschiebemechanismus (34) außerdem eine zweite darauf angebrachte Erkennungseinrichtung (344) aufweist und wobei dann, wenn die zweite Erkennungseinrichtung (344) die Klemmeinrichtung (381) des ersten Hilfs-Fixierumechanismus (38) erkennt, der Computer (600) ein Signal erzeugt, das den Platten-Vorschiebschaft (342) anweist, zu seiner Ruhestellung zurückzukehren.

5. Vorrichtung zur Zugangssteuerung für eine optische Platte und Speichervorrichtung nach einem der Ansprüche 1 bis 4, wobei der zweite Platten-Vorschiebemechanismus (36) außerdem umfasst:
ein Vorschiebeelement (363) das einen ersten durchgehenden Schlitz (363a) aufweist, zum Durchlaufen des Positionierungsschlitzes (361); und
einen dritten Antriebsmechanismus (366), der umfasst:
eine Gruppe von Riemenscheiben (364); und
einen Riemen (365), der auf die Gruppe von Riemenscheiben (364) montiert ist;
wobei die Gruppe von Riemenscheiben (364) und die Gruppe von Riemen (365) des dritten Antriebsmechanismus (366) das Vorschiebeelement (363) antreiben, um die Platte (32) zu den mehreren Schlitzen (301) der sich drehenden Scheibe (30) vorzuschieben.

6. Vorrichtung zur Zugangssteuerung für eine optische Platte und Speichervorrichtung nach Anspruch 5, wobei dann, wenn die erste Erkennungseinrichtung (362) die Platte (32) an einer vorbestimmten Position erkennt, der Computer (600) ein Signal erzeugt, das den dritten Antriebsmechanismus (366) anweist, anzuhalten.

7. Vorrichtung zur Zugangssteuerung für eine optische Platte und Speichervorrichtung nach einem der Ansprüche 1 bis 6, wobei der Koordinaten-Verschiebemechanismus (44) umfasst:
einen Horizontalbewegungsmechanismus (441), der eine Gruppe von Riemenscheiben (441c) und eine Gruppe von Riemen (441b) aufweist, die darauf montiert sind;
eine horizontale Stange (442), die horizontal durch den Horizontalbewegungsmechanismus (441) verläuft und horizonal in einem Vorrichtungskörper (46) der Vorrichtung zur Zugriffssteuerung für eine optische Platte und Speichervorrichtung montiert ist, sodass sich der Horizontalbewegungsmechanismus (441) horizontal entlang der horizontalen Stange (442) bewegen kann;
einen Vertikalbewegungsmechanismus (443), der in den Horizontalbewegungsmechanismus (441) eingebaut ist, wobei der Vertikalbewegungsmechanismus (443) mit dem Drehmechanismus (42) verbunden bzw. gekoppelt ist;
und eine vertikale Stange (444), die vertikal durch den Vertikalbewegungsmechanismus (443) verläuft und vertikal in ein Gehäuse (441a) des Horizontalbewegungsmechanismus (441) eingebaut ist, sodass sich der Vertikalbewegungsmechanismus (443) vertikal entlang der vertikalen Stange (444) bewegen kann.

8. Vorrichtung zur Zugangssteuerung für eine optische Platte und Speichervorrichtung nach Anspruch 7, weiterhin umfassend mehrere Sensoren (48), die an dem Koodinaten-Verschiebemechanismus (44) angebracht sind um eine Stellung des Koordinaten-Verschiebemechanismus (44) zu beurteilen.

9. Vorrichtung zur Zugangssteuerung für eine optische Platte und Speichervorrichtung nach einem der Ansprüche 1 bis 8, wobei der Greifermechanismus (40) außerdem umfasst:
einen Ausleger (402);
einen Ausfahrmechanismus (403), der ein Ausfahrelement (403a) umfasst, das sich axial bewegen kann;
mehrere erste Stangen (404), von denen das eine Ende schwenkbeweglich mit dem Ausfahrelement (404) des Ausfahnnechanismus (403) verbunden ist; und
mehrere zweite Stangen (405), wobei jede der mehreren zweiten Stangen (405) ein Ende aufweist, das jeweils schwenkbeweglich mit dem anderen Ende der ersten Stange (404) verbunden ist, wobei das andere Ende von jeder der mehreren zweiten Stangen (405) jeweils an den mehreren Greifern (401) befestigt ist und schwenkbeweglich mit dem Ausleger (402) verbunden ist;
wobei dann, wenn das Ausfahrelement (403a) des Ausfahrmechanismus (403) ausfährt, die mehreren Greifer (401) zusammengefahren werden und wobei dann, wenn das Ausfahrelement (403a) des Ausfahrmechanismus (403) einfäht, die mehreren Greifer (401) nach außen gerichtet ausfahren, um die Platte (32) gegen eine Ebene (402a) des Auslegers (402) zu greifen.

10. Vorrichtung zur Zugangssteuerung für eine optische Platte und Speichervorrichtung nach Anspruch 9, wobei jeder der mehreren Greifer (401) auf seiner Außenseite einen Haken (401 a) aufweist und wobei dann, wenn die mehreren Greifer (401) ausgefahren sind, der Haken (401a) die Platte(32) greift.

11. Vorrichtung zur Zugangssteuerung für eine optische Platte und Speichervorrichtung nach Anspruch 9 oder 10, wobei der Greifermechanismus (40) außerdem einen vierten Antriebsmechanismus (406) aufweist, um den Ausfahrmechanismus (403) zu steuern.

12. Vorrichtung zur Zugangssteuerung für eine optische Platte und Speichervorrichtung nach einem der Ansprüche 9 bis 11, wobei der Plattenspieler (50a, 50b) ein Plattenspieler gemäß einer Standardspezifikation ist.

## Revendications

1. Un dispositif de contrôle d'accès au disque optique et de stockage comportant :
un plateau rotatif horizontal (30) comportant de multiples fentes (301) en son sein s'étendant en direction radiale pour le stockage vertical de disques (32) et leur mise en rotation ;
un premier mécanisme pousseoir de disques (34) comprenant :
un cadre (341), y formant un canal (341a) pour permettre à un disque stocké sur ledit plateau rotatif (30) d'y demeurer ou de le traverser ; et
un axe pousseoir de disque (342), ayant une extrémité disposée dans ledit cadre (341) pour pousser ledit disque (32) suivant une direction radiale dudit disque (32) ;
un second mécanisme pousseoir de disques (36) comprenant :
une fente de positionnement (361), pour le positionnement dudit disque (32) poussé par ledit premier mécanisme pousseoirs de disque (34) et pour le maintien vertical dudit disque (32) ; et
un premier dispositif de détection (362), pour détecter si ledit disque (32) est disposé dans ladite fente de positionnement (361),
un mécanisme de fixation auxiliaire (38), comprenant :
un blocage (381) agissant sur la périphérie supérieure dudit disque (32) pour le serrage dudit disque (32) dans ladite fente de positionnement (361) ;
un bras étendable (382), ayant une extrémité fixée à ladite attache (381) ; et
un premier mécanisme d'entraînement (383) pour la commande dudit bras étendable (382) et dudit blocage (381) ;
un mécanisme de préhension (40) pour le maintien dudit disque (32), ledit mécanisme de préhension (40) comprenant de multiples pinces (401), lesdites multiples pinces pouvant passer au travers d'un orifice central (321) dudit disque (32) dans ladite fente de positionnement (361) lorsque rassemblés ensemble, lequel s'étend vers l'extérieur pour la préhension dudit disque ;
un mécanisme de rotation (42) connecté audit mécanisme de préhension (40) pour la mise en rotation dudit mécanisme de préhension (40) suivant une direction gauche ou droite jusqu'à une valeur de 90 degrés, respectivement, de telle manière que ledit disque (32) est soulevé vers l'extérieur de ladite fente de positionnement (361) et est orientée de manière horizontale ;
un mécanisme de déplacement de coordonnées (44), connecté audit mécanisme de rotation (42) pour la commande horizontale ou verticale des positions dudit mécanisme de préhension (40) ; et
au moins un lecteur de disque (50a, 50b), chacun desdits lecteurs de disques (50a, 50b) comprenant un chariot (501a, 501b) s'étendant en son sein, pour recevoir ledit disque (32) relaché par ledit mécanisme de préhension (40) ;
dans lequel ledit dispositif de contrôle d'accès au disque optique et de stockage sélectionne ledit disque (32) via le logiciel d'un ordinateur (600) connecté, et pousse ledit disque (32) dans ledit premier mécanisme pousseoir de disque (34) vers ledit second mécanisme pousseoir de disque (36), ledit mécanisme de fixation auxiliaire fixant ledit disque (32) positionné dans ledit second mécanisme pousseoir de disque (36), ledit mécanisme de préhension (40) maintenant ledit disque (32) au travers dudit mécanisme de rotation (42) et dudit mécanisme de déplacement de coordonnées (44), puis ledit mécanisme de fixation auxiliaire (38) relâchant ledit disque (32) et ledit mécanisme de préhension (40) relâchant ledit disque (32) vers ledit chariot (501a, 501b) dudit lecteur via ledit mécanisme de rotation (42) et dudit mécanisme de déplacement de coordonnées.

2. Le dispositif de contrôle d'accès au disque optique et de stockage de la revendication 1, dans lequel lesdites multiples pinces (401) dudit mécanisme de préhension (40) maintiennent ledit disque (32), ledit ordinateur (600) générant un signal commandant ledit blocage (381) dudit mécanisme de fixation auxiliaire (38) pour relâcher ledit disque (32) et le ramener dans sa position initiale.

3. Le dispositif de contrôle d'accès au disque optique et de stockage de la revendication 1 ou 2, dans lequel ledit premier mécanisme pousseoir de disque (34) comporte en outre un second mécanisme d'entraînement (343) pour la commande dudit axe pousseoir de disque (342) dans lequel l'axe pousseoir de disque (342) présente une surface archée (342a) correspondant à un côté dudit disque (32).

4. Le dispositif de contrôle d'accès au disque optique et de stockage de l'une quelconque des revendications 1 à 3 dans lequel ledit premier mécanisme pousseoir de disque (34) comporte en outre un second dispositif détecteur (344) aménagé, et dans lequel ledit second dispositif détecteur (344) détecte ledit blocage (381) dudit mécanisme de fixation auxiliaire (38), ledit ordinateur (600) générant un signal commandant ledit axe pousseoir de disque de retourner dans sa position initiale.

5. Le dispositif de contrôle d'accès au disque optique et de stockage de la revendication 1 à 4, dans lequel ledit second mécanisme pousseoir de disque (36) comporte en outre
un élément pousseoir (363) comportant un orifice de passage (363) pour le passage au travers de l'orifice de la fente de positionnement (361) ; et
un troisième mécanisme d'entraînement (366), comportant :
une jeu de poulies (364) ;
une jeu de courroies (365) disposé sur ledit jeu de poulie (364);
dans lequel ledit jeu de poulies (364) et ledit jeu de courroies (365) dudit troisième mécanisme d'entraînement (366) entraîne ledit élément pousseoir (363) pour pousser ledit disque (32) vers lesdites multiples fentes (301) dudit plateau rotatif (30).

6. Le dispositif de contrôle d'accès au disque optique et de stockage de la revendication 5, dans lequel ledit premier dispositif détecteur (362) détecte ledit disque (32) à un emplacement prédéterminé, ledit ordinateur (600) générant un signal commandant l'arrêt dudit troisième mécanisme d'entraînement (366).

7. Le dispositif de contrôle d'accès au disque optique et de stockage de l'une quelconque des revendications 1 à 6, dans lequel ledit mécanisme de déplacement de coordonnées (44) comporte :
un mécanisme de mouvement horizontal (441), comportant un jeu de poulies (441c) et un jeu de courroies y installées (441b) ;
une tige horizontale (442) passant de manière horizontale au travers dudit mécanisme de mouvement horizontal (441) et disposée de manière horizontale dans un corps d'appareil (46) dudit dispositif de contrôle d'accès au disque optique et de stockage pour permettre audit mécanisme de mouvement horizontal (441) de se déplacer horizontalement le long de ladite tige horizontale (442) ;
un mécanisme de mouvement vertical (443), installé dans ledit mécanisme de mouvement horizontal (441), ledit mécanisme de mouvement vertical (443) étant connecté audit mécanisme rotatif (42);
une tige verticale (444) passant de manière verticale au travers dudit mécanisme de mouvement vertical (443) et disposée de manière verticale dans un logement (441a) dudit mécanisme de mouvement horizontal (441) pour permettre au audit mécanisme de mouvement vertical (443) de se déplacer verticalement le long de ladite tige verticale (444).

8. Le dispositif de contrôle d'accès au disque optique et de stockage de la revendication 7, comportant en outre de multiple capteurs (48) installé audit mécanisme de déplacement de coordonnées (44) pour décider une position dudit mécanisme de déplacement de coordonnées.

9. Le dispositif de contrôle d'accès au disque optique et de stockage de l'une quelconque des revendications 1 à 8, dans lequel ledit mécanisme de préhension (40) comporte en outre :
une armature (402) ;
un mécanisme d'extension (403) comportant un élément extensible (403a) pouvant se déplacer axialement ;
de multiples premières tiges (404), ayant une extrémité connectée de manière pivotable audit mécanisme d'extension (403) ; et
de multiples secondes tiges (405), chacune d'entre elles ayant une extrémité connectée de manière pivotable à l'autre extrémité, respectivement, desdites multiples premières tiges (404)
l'autre extrémité de chacune desdites multiples secondes tiges (405) étant respectivement fixée audites multiples pinces (401) et connectée de manière pivotable à ladite armature (402) ;
dans lequel ledit élément d'extension (403a) dudit mécanisme d'extension (403) se développe, lesdites multiples pinces (401) se joignant ensemble, et lorsque ledit élément d'extension (403a) dudit mécanisme d'extension (403) se retire en arrière, lesdites multiples pinces (401) se développent vers l'extérieur pour la saisie dudit disque (32) contre un plan (402a) de l'armature (402).

10. Le dispositif de contrôle d'accès au disque optique et de stockage de la revendication 9, dans lequel chacune des multiples pinces (401) présentent sur leur côté extérieur une accroche (401a) et, lorsque lesdites multiples pinces se déploient, ladite accroche (401a) saisit ledit disque (32).

11. Le dispositif de contrôle d'accès au disque optique et de stockage de la revendication 9 ou 10, dans lequel ledit mécanisme de préhension (40) comporte en outre un quatrième mécanisme d'entraînement (406) pour le contrôle dudit mécanisme d'extension (403).

12. Le dispositif de contrôle d'accès au disque optique et de stockage de l'une quelconque des revendications 9 à 11, dans lequel ledit lecteur de disque (50a, 50b) est un lecteur de disque de type standard.
